# EUROPÄISCHE PATENTSCHRIFT

(11) **EP 2 775 109 B1**
(45) Veröffentlichungstag und Bekanntmachung des Hinweises auf die Patenterteilung: **12.07.2017**
(21) Anmeldenummer: 13002559.6
(22) Anmeldetag: 16.05.2013
(51) Int. Cl.: F01K 27/00

(54) **Thermodynamischer Energiewandler**
Thermodynamic energy converter
Convertisseur d'énergie thermodynamique

(30) Priorität: 04.06.2012 DE 102012011514
(43) Veröffentlichungstag der Anmeldung: 10.09.2014
(73) Patentinhaber: Förderverein dream4life e.V., 09212 Limbach-Oberfrohna, OT Pleißa (DE)
(72) Erfinder: Merker, Kai-Uwe, 09212 Limbach-Oberfrohna (DE); Siebeneiger, Gunther, 09355 Gersdorf (DE); Kertscher, Norbert, 09337 Hohenstein-Ernstthal (DE)
(74) Vertreter: Mischung, Ralf

(56) Entgegenhaltungen:
- WO-A1-97/44628
- WO-A1-2011/151888
- CN-A- 102 384 676
- DE-A1- 10 126 403
- US-A- 3 608 311

## Beschreibung

Die Erfindung betrifft einen Wandler mit einem innenseitig isolierten Druckbehälter, in welchem eine bestimmte Menge eines Arbeitsmittels angeordnet ist, wobei der Druckbehälter über Ventile mit einem Wärmetauscher hoher Temperatur sowie über Ventile über einem Wärmetauscher niedriger Temperatur verbunden ist und wobei in dem Druckbehälter ein Trennelement angeordnet ist.

"Mit Hilfe einer einfachen Zustandsänderung kann aus einer bestimmten Arbeitsmittelmenge nur einmalig Arbeit gewonnen werden. Um die Arbeitsleistung wiederholen zu können, muß das Arbeitsmittel in den Anfangszustand zurück geführt werden. Durch einfache Umkehrung der Zustandsänderung wird bei völliger Reversibilität in beiden Fällen die gewonnene Arbeit gerade wieder aufgebraucht. Wenn Arbeit gewonnen werden soll, muß der Anfangszustand auf einem anderen Wege erreicht werden. Der Zustand verändert sich in diesem Fall zyklisch, d.h., das Arbeitsmittel durchläuft einen Kreisprozess. Nur dabei kann Wärme laufend in Arbeit umgewandelt werden, ..." [Taschenbuch Maschinenbau, Band 1, Grundlagen; VEB Verlag Technik Berlin 1964, Seite 1012]

Insofern spielen bei der Umwandlung thermischer Energie in mechanische Energie bzw. mechanischer Energie in thermische Energie Kreisprozesse eine wesentliche Rolle. Entscheidend ist, dass das Arbeitsmittel nach einmaligem Durchlauf dieses Kreisprozesses den selben Zustand einnimmt, welches das Arbeitsmittel zu Beginn des Kreisprozesses hatte. Verwendet man als Arbeitsmittel ein Gas, so ist dessen Zustand definiert durch die drei Zustandsgrößen p (Druck), V (Volumen) und T (Temperatur). Diese stehen im Zusammenhang: p x V / T = konstant.

Folgt man diesem thermodynamischen Grundprinzip und legt man dieses der Konstruktion einer Arbeits- bzw. Wärmekraftmaschine zugrunde, bedarf es lediglich eines Bauteils, welches die Zustandsgrößen p, V, T einzeln oder kombiniert wahlweise konstant halten bzw. verändern kann. Mit diesem Bauteil wird es dann möglich, einzelne Zustandsänderungen eines Arbeitsmittels (z.B. die isochore; die isotherme, die isobare, die adiabatische oder eine polytrope) optimal realisieren zu können. Somit wird es weiterfolgend möglich, jeden beliebigen Kreisprozess allein durch einfaches nacheinander Abfolgenlassen unterschiedlicher Zustandsänderungen eines Arbeistmittels mit diesem einen Bauteil technisch zu realisieren.

Stand der Technik, von dem die Erfindung ausgeht, ist ein Wandler mit einem innenseitig isolierten Druckbehälter, in welchem eine bestimmte Menge eines Arbeitsmittels angeordnet ist (WO 2011/151888 A1) Bei dieser bekannten Konstruktion ist der Druckbehälter über Ventile mit einem Wärmetauscher hoher Temperatur sowie über weitere Ventile mit einem Wärmetauscher niedriger Temperatur verbunden ist. In dem Druckbehälter befindet sich ein Trennelement, welches in Form eines Kolbens ausgebildet ist, der über ein Gelenkgetriebe seinen Antrieb erhält.

Weiterer Stand der Technik ist eine Vorrichtung zur Umwandlung thermischer Energie in mechanische Energie, bei welcher der Druckbehälter ebenfalls in zwei Kammern aufgeteilt ist (US 3 608 311 A). Die beiden Kammern stehen über Rohrleitungen und Pumpen wirkungsmäßig miteinander in Verbindung. Die in den oberen Behälterraum führende Leitung ist mit einer Düse versehen, so dass die aus dem unteren Teil des Behälters stammende Flüssigkeit in den oberen Behälterbereich versprüht wird. Es werden damit feine Partikel gebildet, welche in den das Gas enthaltenden oberen Behälterbereich eingelagert sind.

Damit ist diese bekannte Vorrichtung nur zur Anwendung bei einem einzigen Kreisprozess vorgesehen.

Demgegenüber besteht die Aufgabe der vorliegenden Erfindung darin, eine neuartige Konstruktion zu schaffen, welche eine regelbare Leistungsentnahme aus dem Druckbehälter unabhängig von dessen Leistungszufuhr bereitstellt.

Diese Aufgabe wird erfindungsgemäß mit den Merkmalen im kennzeichnenden Teil des Anspruchs 1 gelöst. Vorteilhafte Weiterbildungen ergeben sich aus den Unteransprüchen.

Die Erfindung wird nachfolgend anhand von in der Zeichnung dargestellten Ausführungsbeispielen näher beschrieben. In der Zeichnung zeigen:

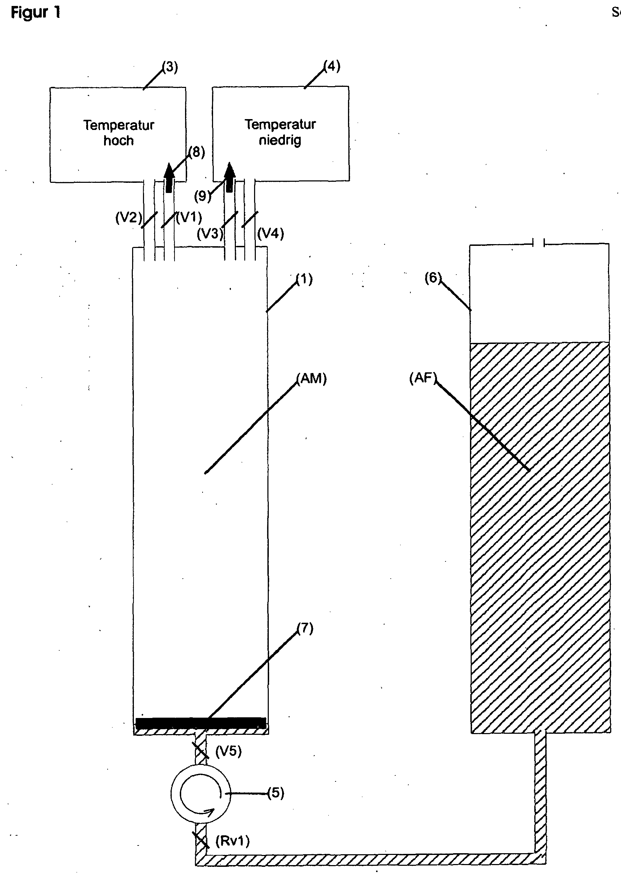

- Fig. 1 eine schematische Seitenansicht des erfindungsgemäßen Wandlers mit einer einfachen Verbindung zwischen Druckbehälter und Vorratsbehälter.

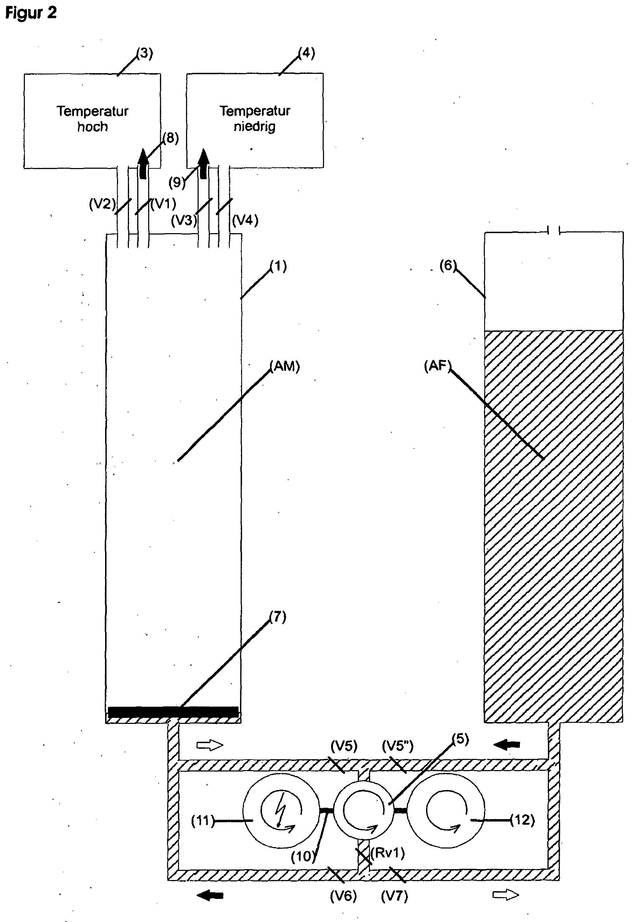

- Fig. 2 eine weitere Ausführungsform der Erfindung, wonach der Druckbehälter und der Vorratsbehälter über mehrere Leitungen miteinander verbunden sind.

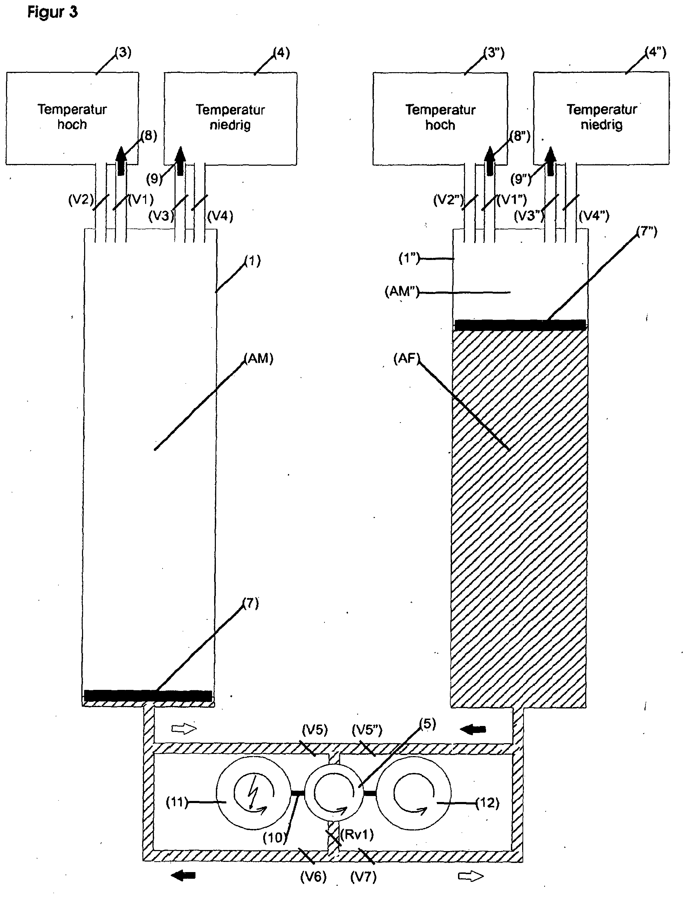

- Fig. 3 eine weitere Ausgestaltung der Erfindung in schematischer Seitenansicht mit zwei miteinander gekuppelten erfindungsgemäßen Wandlern.

### Figur 1

In einem innenseitig isolierten Druckbehälter (1) befindet sich eine bestimmte Menge eines Arbeitsmittels (AM), z.B. Luft. Dieser Druckbehälter (1) ist über die Ventile 1 (V1) und 2 (V2) mit einem Wärmetauscher hoher Temperatur (3), über die Ventile 3 (V3) und 4 (V4) mit einem Wärmetauscher niedriger Temperatur (4) und über das Ventil 5 (V5) mit dem Eingang eines Hydraulikmotors (5), welcher auch als Hydraulikpumpe betrieben werden kann, verbunden. Der Ausgang dieses Hydraulikmotors (5) ist über ein Regelventil (Rv1), welches die Durchflussmenge eines Arbeitsfluides (AF) in Abhängigkeit des Druckes und/oder der Temperatur des Arbeitsmittels (AM) im Druckbehälter (1) begrenzen/steuern kann, verbunden mit einem Vorratsbehälter (6), in welchem sich ein zum Betrieb des Hydraulikmotors geeignetes Arbeitsfluid (AF) befindet. Auf dem Boden im Inneren des Druckbehälters (1) liegt ein frei bewegliches Trennelement (7), welches so beschaffen ist, dass es eine geringere Dichte aufweißt, als das Arbeitsfluid (AF) und zudem isoliert.

Die Wärmetauscher (3) und (4) verfügen jeweils über einen innenliegenden Rohrlüfter (8) und (9), welche dazu dienen, das Arbeitsmittel in eine Strömung vom Druckbehälter (1) durch den jeweiligen Wärmetauscher (3) bzw. (4) wieder zurück in den Druckbehälter (1) zu versetzen. Im einfachsten Fall können die Wärmetauscher (3) und (4) aus einer wärmeleitenden Druckleitung bestehen, welche zum einen in einem Bereich höherer Temperatur liegt und über den Rohrlüfter (8) die Ventile 1 (V1) und 2 (V2) verbindet, und zum anderen in einem Bereich niedrigerer Temperatur liegt und über den Rohrlüfter (9) die Ventile 3 (V3) und 4 (V4) verbindet.

### A - Adiabatische Zustandsänderung des Arbeitsmittels (AM):

Wird bei geschlossenen Ventilen 1 (V1), 2 (V2), 3 (V3) und 4 (V4) der Hydraulikmotor (5) bei geöffneten Ventil 5 (V5) durch Antreiben seiner Abtriebswelle als Pumpe betrieben, fördert er Arbeitsfluid (AF) aus dem Vorratsbehälter (6) in den innenseitig isolierten Druckbehälter (1). Entsprechend verkleinert sich das Volumen des Raumes, welcher mit Arbeismittel (AM) ausgefüllt ist und der Druck, sowie die Temperatur des Arbeitsmittels (AM) steigen in Folge der am Arbeitsmittel (AM) geleisteten Volumenänderungsarbeit an. Im umgekehrten Fall wird das nunmehr unter hohem Druck bei höherer Temperatur stehende Arbeitsmittel (AM) bestrebt sein, sich zu entspannen und dabei abzukühlen und treibt das Arbeitsfluid (AF) aus dem Druckbehälter (1) über das geöffnete Ventil 5 (V5) durch den Hydraulikmotor (5) über das Regelventil (Rv1) in den Vorratsbehälter (6). In diesem Fall wird die vom Arbeitsmittel (AM) geleistete Volumenänderungsarbeit an der Abtriebswelle des Hydraulikmotors verfügbar. Da wegen der innenseitigen Isolation des Druckbehälters (1) und der isolierenden Wirkung des auf dem Arbeitsfluid (AF) schwimmenden Trennelements (7) kein Wärmeaustausch mit der Umgebung erfolgen kann, wird das Arbeitmittel (AM) in diesem Fall adiabatisch komprimiert oder entspannt sich adiabatisch.

### B - Isochore Zustandsänderung des.Arbeitsmittels (AM):

Werden ausgehend von den geschlossenen Ventilen 1 (V1), 2 (V2), 3 (V3), 4 (V4) und 5 (V5) die Ventile 1 (V1) und 2 (V2) geöffnet und der Rohrlüfter (8) betätigt, oder die Ventile 3 (V3) und 4 (V4) geöffnet und der Rohrlüfter (9) betätigt, strömt das Arbeitsmittel (AM) aus dem Druckbehäter (1) über Ventil 1 (V1) oder 3 (V3) durch den Wärmetauscher (3) oder den Wärmetauscher (4) zurück über Ventil 2 (V2) oder 4 (V4) in den Druckbehälter (1). Im Verlauf dieser Zirkulation nimmt das Arbeitsmittel (AM) die Temperatur des Wärmetauschers (3) oder des Wärmetauschers (4) an. Wegen der geschlossenen Ventile 5 (V5), 1 (V1), 2 (V2) oder 5 (V5), 3 (V3) und 4 (V4) bleibt das Volumen des Raumes, welches das Arbeitsmittel. (AM) bei dieser Zirkulation einnimmt, während des Erwärmens oder des Abkühlens des Arbeitsmittels (AM) unverändert. Infolge dessen erfährt das Arbeitsmittel (AM) eine isochore Druckerhöhung bei Erwärmung, oder eine isochore Druckerniedrigung bei Abkühlung.

### C - Isotherme Zustandsänderung des Arbeitsmittels (AM):

Wird das Arbeitsmittel (AM) wie unter A beschrieben adiabatisch komprimiert und zirkuliert das Arbeitsmittel (AM) dabei bei geöffneten Ventilen 3 (V3) und 4 (V4) durch betätigen des Rohrlüfters (9) durch den Wärmetauscher (4) und hat das Arbeitsmittel (AM) zu Beginn der adiabatischen Kompression die gleiche Temperatur wie der Wärmetauscher (4) wird die bei der Kompression entstehende Wärme unmittelbar über den Wärmetauscher (4) abgeführt. Ergibt sich durch entsprechende Regelung der Durchflussmenge von Arbeitsfluid (AF) durch das Regelventil (Rv1) über den Verlauf der. Kompression eine gleichbleibende Temperatur des Arbeitsmittels (AM), so ist eine isotherme Kompression des Arbeitsmittels (AM) realisiert. Analog dazu ergibt sich bei entsprechender Regelung der Durchflussmenge von Arbeitsfluid (AF) durch das Regelventil (Rv1) eine isotherme. Entspannung .des Arbeitsmittels (AM) in dem Fall, wenn sich das Arbeitsmittel (AM) wie unter A beschrieben adiabatisch entspannt und dabei bei geöffneten Ventilen 1 (V1) und 2 (V2) durch betätigen des Rohrlüfters (8) durch den Wärmetauscher (3) zirkuliert und das Arbeitsmittel (AM) zu Beginn der adiabatischen. Entspannung die gleiche Temperatur hat wie der Wärmetauscher (3), da die durch die adiabatische Entspannung resultierende Temperaturerniedrigung des Arbeitsmittels (AM) durch ständige Wärmeaufnahme innerhalb des Wärmetauschers (3) ausgeglichen wird.

### D - isobare Zustandsänderung des Arbeitsmittels (AM):

Wird das Arbeitsmittel (AM) wie unter A beschrieben adiabatisch komprimiert und zirkuliert das Arbeitsmittel (AM) bei geöffneten Ventilen 3 (V3) und 4 (V4) durch betätigen des Rohrlüfters (9) durch den Wärmetauscher (4) und hat das Arbeitsmittel (AM) zu Beginn der adiabatischen Kompression eine höhere Temperatur als der Wärmetauscher (4), so hat das Arbeitsmittel (AM) am Ende der Kompression eine niedrigere Temperatur als zu Beginn der Kompression. Ergibt sich durch entsprechende Regelung der Durchflussmenge von Arbeitsfluid (AF) durch das Regelventil (Rv1) über den Verlauf der Kompression ein gleichbleibender Druck des Arbeitsmittels (AM), so ist eine isobare Kompression des Arbeitsmittels (AM) realisiert. Analog dazu ergibt sich bei entsprechender Regelung der Durchflussmenge von Arbeitsfluid (AF) durch das Regelventil (Rv1) eine isobare Entspannung des Arbeitsmittels (AM), wenn sich das Arbeitsmittel (AM) wie unter A beschrieben adiabatisch entspannt und dabei bei geöffneten Ventilen 1 (V1) und 2 (V2) durch betätigen des Rohrlüfters (8) durch den Wärmetauscher (3) zirkuliert.

### E: polytrope Zustandsänderung eines Arbeitsmittels (AM):

Durch die Regelbarkeit der Durchflussmenge von Arbeitsfluid (AF) durch das Regelventil (Rv1) und einer Steuereinheit, welche die Umdrehungszahl der Rohrlüfter (8) und (9) in Abhängigkeit von Druck und/oder Temperatur des Arbeitsmittels (AM) verändern kann, ist jede polytrope Kompression oder Entspannung des Arbeitsmittels (AM) innerhalb der Volumengrenzen des Raumes, welches das Arbeitsmittel (AM) einnehmen kann realisierbar, da über diese Regelungs- und Steuerbarkeit sowohl der Ein- oder Austrag von mechanischer Energie (Volumenänderungsarbeit), als auch der Ein- oder Austrag von thermischer Energie über den Verlauf der Zeit beliebig verändert werden kann.

Mit diesem AQS-Wandler als Grundkonstruktionsbauteil ist es nun möglich, eine Arbeitskraft- oder Wärmekraftmaschine zu konstruieren, welche hinsichtlich des verwendeten Kreisprozesses frei gestaltet werden kann. Der Name für eine solche mit wenigstens einem AQS-Wandler konstruierten Arbeits- oder Wärmekraftmaschine wird auf den Namen AQS-System festgelegt.

### Figur 2

Zeigt einen Wandler wie zuvor beschrieben. Er ist dadurch gekennzeichnet, dass der Druckbehälter (1) und der Vorratsbehälter (6) über die Ventile 5 (V5) und 5" (V5") miteinander verbunden sind und eine gemeinsame Verbindung zwischen den Ventilen 5 (V5) und 5" (V5") mit dem Eingang des Hydraulikmotors (5) aufweisen, welcher wiederum über eine Welle (10) verbunden ist mit einem elektrischen Generator (11) und einem Schwungradgetriebe (12). Der Ausgang des Hydraulikmotors (5) ist verbunden über das Regelventil (Rv1) zum einen über Ventil 6 (V6) mit dem Druckbehälter (1) und zum anderen über Ventil 7 (V7) mit dem Ausgleichsbehälter (6). Der Hydraulikmotor (5) verfügt zudem über eine geeignete Freilaufeinrichtung (z.B. einen Bypass). Über eine Steuer- und Regelungseinheit, welche dadurch gekennzeichnet ist, dass sie die Ventile 1 (V1), 2 (V2), 3 (V3), 4 (V4), 5 (V5), 5" (5") das Regelventil. (Rv1) und die Drehzahl der Rohrlüfter (8) und (9) jeweils für sich und/oder in Kombination frei ansteuern/regeln kann, ist es möglich, einzelne Zustandsänderungen des Arbeitsmittels (AM) nacheinander zu realisieren und kontinuierlich zu wiederholen. Ein einfaches Beispiel eines Kreisprozesses wäre eine isotherme Kompression, gefolgt von einer isochoren Druckerhöhung und einer anschließenden adiabatischen Entspannung des Arbeitsmittels (AM).

### Figur 3

Zeigt ein System bestehend aus zwei erfindungsgemäßen Wandlern. Es ist dadurch gekennzeichnet, das der Vorratsbehälter (6) eines Wandlers ersetzt ist durch einen zweiten Wandler und diese zwei Wandler über die Ventile 5 (V5) und 5" (V5") miteinander verbunden sind und eine gemeinsame Verbindung zwischen den Ventilen 5 (V5) und 5" (V5") mit dem Eingang des Hydraulikmotors (5) aufweisen, welcher wiederum über eine Welle (10) verbunden ist mit einem elektrischen Generator (11) und einem Schwungradgetriebe (12). Der Ausgang des Hydraulikmotors (5) ist verbunden über das-Regelventil (Rv1) zum einen über Ventil 6 (V6) mit dem Druckbehälter (1) und zum anderen über Ventil 7 (V7) mit dem Druckbehälter (1"). Der Hydraulikmotor (5) verfügt zudem. über eine geeignete Freilaufeinrichtung (z.B. einen Beipass). Über eine Steuer- und Regelungseinheit, welche dadurch gekennzeichnet ist, dass sie die Ventile 1 (V1), 1" (1"), 2 (V2), 2" (2"), 3 (V3), 3 (3"), 4 (V4), 4" (V4"), 5 (V5), 5" (V5"), das Regelventil (Rv1) und die Drehzahl der Rohrlüfter (8), (8"), (9) und (9") jeweils für sich und/oder in Kombination frei ansteuern/regeln kann, ist es möglich, z.B. volumenänderungssynchrone (Bezeichnung der Erfinder) Kreisprozesse in einem geschlossenen System zu realisieren. Ein Beispiel für einen derartigen volumenänderungssynchronen Kreisprozesses ist:

| | |
|---|---|
| In Druckbehälter (1) | isotherme Kompression, gefolgt von einer adiabatischer Kompression des Arbeitsmittels (AM) |
| und zudem zeitgleich | |
| in Druckbehälter (1") | isotherme Expansion, gefolgt von einer adiabatischer Expansion des Arbeitsmittels (AM"). |

### Legende:

- (1), (1"): Druckbehälter, innenseitig isoliert
- (AM), (AM"): Arbeitsmittel
- (3), (3"): Wärmetauscher hoher Temperatur
- (4), (4"): Wärmetauscher niedriger Temperatur
- (5): Hydraulikmotor/-pumpe
- (AF): Arbeitsfluid
- (6): Vorratsbehälter
- (7), (7"): Trennelement
- (8), (8"): Rohrlüfter
- (9), (9"): Rohrlüfter
- (V1): Ventil 1
- (V2): Ventil 2
- (V3): Ventil 3
- (V4): Ventil 4
- (V5): Ventil 5
- (V6): Ventil 6
- (V7): Ventil 7
- (V1"): Ventil 1"
- (V2"): Ventil 2"
- (V3"): Ventil 3"
- (V4"): Ventil 4"
- (V5"): Ventil 5"
- (Rv1): Regelventil
- (10): Welle
- (11): Elektrischer Generator
- (12): Schwungradgetriebe

## Patentansprüche

1. Thermodynamischer Energiewandler mit einem innenseitig isolierten Druckbehälter (1), in welchem eine bestimmte Menge eines Arbeitsmittels (AM) angeordnet ist,
wobei der Druckbehälter (1) über Ventile (V1, V2) mit einem Wärmetauscher (3) hoher Temperatur sowie über Ventile (V3, V4) mit einem Wärmetauscher (4) niedriger Temperatur verbunden ist und wobei in dem Druckbehälter (1) ein Trennelement angeordnet ist,
**dadurch gekennzeichnet,**
**dass** der Druckbehälter (1) über ein Ventil (V5) mit dem Eingang eines Hydraulikmotors (5), welcher auch als Hydraulikpumpe betreibbar ist, verbunden ist,
**dass** der Ausgang des Hydraulikmotors (5) über ein Regelventil (Rv1) mit einem Vorratsbehälter (6) verbunden ist,
wobei das Regelventil (Rv1) die Durchflussmenge eines Arbeitsfluids (AF) in Abhängigkeit des Drucks und/oder der Temperatur des Arbeitsmittels (AM) im Druckbehälter (1) steuert,
**dass** sich im Vorratsbehälter (6) das zum Betrieb des Hydraulikmotors (5) vorgesehene Arbeitsfluid (AF) befindet und
**dass** das frei bewegliche Trennelement (7) auf dem Boden des Druckbehälters (1) angeordnet ist und eine geringere Dichte als das Arbeitsfluid (AF) aufweist und zudem isoliert ist.

2. Wandler nach Anspruch 1, **dadurch gekennzeichnet, dass** der Druckbehälter (1) und der Vorratsbehälter (6) über ein weiteres Ventil (V5") miteinander verbunden sind und eine gemeinsame Verbindung zwischen diesen Ventilen und dem Eingang des Hydraulikmotors (5) aufweisen,
wobei der Ausgang des Hydraulikmotors (5) über das Regelventil (Rv1) und ein Ventil (V6) mit dem Druckbehälter (1) und über ein Ventil (V7) mit dem Vorratsbehälter (6) in Verbindung steht und der Hydraulikmotor (5) über eine Welle (10) mit einem elektrischen Generator (11) und einem Schwungrad (12) verbunden ist.

3. Wandler nach Anspruch 1, **dadurch gekennzeichnet, dass** der Vorratsbehälter (6=1") analog dem Druckbehälter (1) ausgebildet ist mit einem Trennelement (7"), mit einem über Ventile (V1", V2") verbundene Wärmetauscher (3") hoher Temperatur und einem über Ventile (V3", V4") verbundenen Wärmetauscher (4") niedriger Temperatur.

4. Wandler nach Anspruch 3, **dadurch gekennzeichnet, dass** durch eine Vorrichtung zum Steuern und Regeln der Ventile (V1, V1"; V2, V2"; V3, V3"; V4, V4"; V5, V5") das Regelventil (Rv1) jeweils einzeln oder in Kombination und die Drehzahl von im Inneren des jeweiligen Wärmetauschers (3;4) liegenden Rohrlüftern (8;9) regelbar ist.

## Claims

1. A thermodynamic energy converter having a pressure tank (1) that is insulated on the inside and in which a certain quantity of a working medium (AM) is arranged,
wherein the pressure tank (1) is connected by way of valves (V1, V2) to a high-temperature heat exchanger (3) and also by way of valves (V3, V4) to a low-temperature heat exchanger (4), and wherein a separating element is arranged in the pressure tank (1),
**characterised**
**in that** the pressure tank (1) is connected by way of a valve (V5) to the input of a hydraulic motor (5) which can also be operated as a hydraulic pump,
**in that** the output of the hydraulic motor (5) is connected by way of a control valve (Rv1) to a storage tank (6),
wherein the control valve (Rv1) controls the flow rate of a working fluid (AF) as a function of the pressure and/or of the temperature of the working medium (AM) in the pressure tank (1),
**in that** the working fluid (AF) provided for the operation of the hydraulic motor (5) is located in the storage tank (6), and
**in that** the freely movable separating element (7) is arranged on the base of the pressure tank (1) and has a lower density than the working fluid (AF) and moreover is insulated.

2. A converter according to claim 1, **characterised in that** the pressure tank (1) and the storage tank (6) are connected together by way of a further valve (V5") and have a common connection between these valves and the input of the hydraulic motor (5),
wherein the output of the hydraulic motor (5) communicates by way of the control valve (Rv1) and a valve (V6) with the pressure tank (1) and by way of a valve (V7) with the storage tank (6), and the hydraulic motor (5) is connected by way of a shaft (10) to an electric generator (11) and a flywheel (12).

3. A converter according to claim 1, **characterised in that** the storage tank (6=1") is formed, analogously to the pressure tank (1), with a separating element (7"), with a high-temperature heat exchanger (3") connected by way of valves (V1", V2"), and a low-temperature heat exchanger (4") connected by way of valves (V3", V4").

4. A converter according to claim 3, **characterised in that** by means of a device for controlling and regulating the valves (V1, V1"; V2, V2"; V3, V3"; V4, V4"; V5, V5") it is possible to regulate the control valve (Rv1) in each case individually or in combination and the speed of pipe fans (8;9) lying in the interior of the respective heat exchanger (3;4).

## Revendications

1. Convertisseur d'énergie thermodynamique avec un récipient sous pression (1) isolé côté intérieur, dans lequel une quantité déterminée d'un moyen de travail (AM) est agencée,
dans lequel le récipient sous pression (1) est relié par le biais de soupapes (V1, V2) à un échangeur de chaleur (3) de température élevée ainsi que par le biais de soupapes (V3, V4) à un échangeur de chaleur (4) de basse température et dans lequel un élément de séparation est agencé dans le récipient sous pression (1),
**caractérisé en ce**
**que** le récipient sous pression (1) est relié par le biais d'une soupape (V5) à l'entrée d'un moteur hydraulique (5) qui peut aussi être exploité comme pompe hydraulique, que la sortie du moteur hydraulique (5) est reliée par le biais d'une soupape de régulation (Rv1) à un réservoir de stockage (6),
dans lequel la soupape de régulation (Rv1) commande la quantité de débit d'un fluide de travail (AF) en fonction de la pression et/ou de la température du moyen de travail (AM) dans le récipient sous pression (1),
**que** le fluide de travail (AF) prévu pour le fonctionnement du moteur hydraulique (5) se trouve dans le réservoir de stockage (6) et
**que** l'élément de séparation (7) librement mobile est agencé sur le fond du récipient sous pression (1) et présente une densité plus faible que le fluide de travail (AF) et est de plus isolé.

2. Convertisseur selon la revendication 1, **caractérisé en ce que** le récipient sous pression (1) et le réservoir de stockage (6) sont reliés entre eux par le biais d'une autre soupape (V5") et présentent une liaison commune entre ces soupapes et l'entrée du moteur hydraulique (5),
dans lequel la sortie du moteur hydraulique (5) est en liaison par le biais de la soupape de régulation (Rv1) et d'une soupape (V6) avec le récipient sous pression (1) et par le biais d'une soupape (V7) avec le réservoir de stockage (6) et le moteur hydraulique (5) est relié par le biais d'un arbre (10) à un générateur électrique (11) et à un volant (12).

3. Convertisseur selon la revendication 1, **caractérisé en ce que** le réservoir de stockage (6=1") est réalisé de manière analogue au récipient sous pression (1) avec un élément de séparation (7"), avec un échangeur de chaleur (3") de température élevée relié par le biais des soupapes (V1", V2") et un échangeur de chaleur (4") de basse température relié par le biais des soupapes (V3", V4").

4. Convertisseur selon la revendication 3, **caractérisé en ce que** la soupape de régulation (Rv1 peut être régulée respectivement individuellement ou en combinaison et la vitesse de rotation de ventilateurs tubulaires (8 ; 9) se trouvant à l'intérieur de l'échangeur de chaleur (3 ; 4) respectif par un dispositif de commande et de régulation des soupapes (V1, V1" ; V2, V2" ; V3, V3" ; V4, V4" ; V5, V5").
